# FASCICULE DE BREVET EUROPEEN

(11) **EP 1 878 621 B1**
(45) Date de publication et mention de la délivrance du brevet: **22.02.2012**
(21) Numéro de dépôt: 07290789.2
(22) Date de dépôt: 26.06.2007
(51) Int. Cl.: B60R 19/18

(54) **Pare-chocs de vehicule automobile, notamment pour vehicule de type break**
Kraftfahrzeugstoßstange insbesondere für Kombiwagen
Bumper of an automobile vehicle, in particular for a station-wagon type vehicle

(30) Priorité: 12.07.2006 FR 0606361
(43) Date de publication de la demande: 16.01.2008
(73) Titulaire: Faurecia Bloc Avant, 92000 Nanterre (FR)
(72) Inventeur: Duquesnoy, David, 25400 Arbouans (FR)
(74) Mandataire: Domenego, Bertrand

(56) Documents cités:
- FR-A- 2 883 238
- FR-A1- 2 833 910
- US-A1- 2005 280 269
- US-B1- 6 364 384

## Description

L'invention concerne en général les pare-chocs de véhicules automobiles, notamment de véhicules de type break.

Plus précisément, l'invention concerne un pare-chocs de véhicule automobile selon le préambule de la revendication 1. Un tel pare-chocs est connu de US 6 364 384.

Un tel pare-chocs peut difficilement être placé à l'arrière d'un véhicule automobile de type break. En effet, en général, les constructeurs automobiles imposent que le pare-chocs arrière des véhicules de type break puisse supporter une charge élevée suivant une direction verticale, avec une faible déformation. La charge et/ou la déformation peuvent être différentes selon les constructeurs automobiles. A titre d'exemple, la charge peut être de l'ordre de 100 dN pour une déformation de l'ordre de 5 mm. Les pare-chocs du type décrit ci-dessus ne respectent pas ce critère.

Dans ce contexte, l'invention vise à proposer un pare-chocs de véhicule automobile qui vérifie le critère de déformation sous effort vertical énoncé ci-dessus.

A cette fin, l'invention porte sur un pare-chocs selon la revendication 1.

Le pare-chocs peut également présenter une ou plusieurs des caractéristiques des revendications dépendantes.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en coupe dans un plan vertical longitudinal d'un pare-chocs conforme à l'invention ;
- la figure 2 est une vue en perspective du support de peau de pare-chocs de la figure 1 ; et
- la figure 3 est une vue de dessus du support de la figure 2.

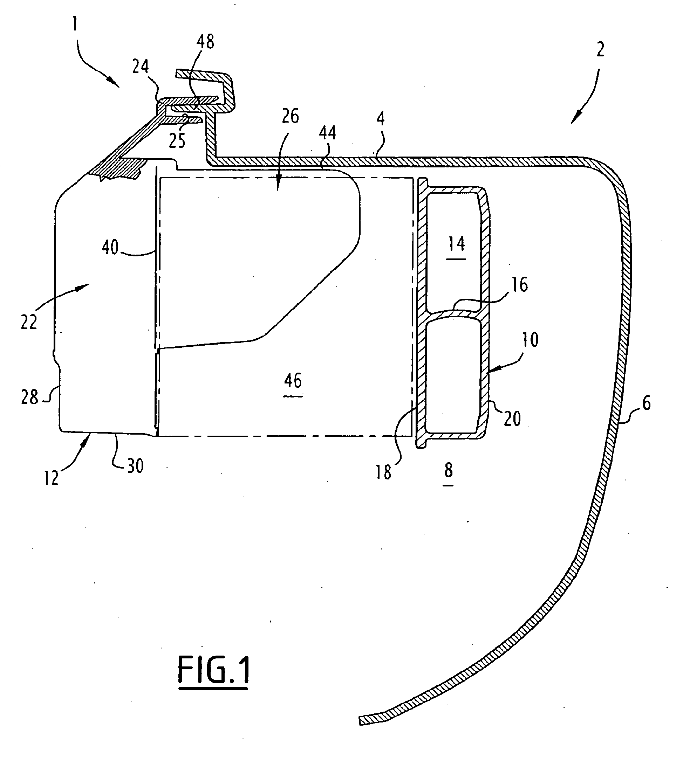

Le pare-chocs représenté sur la figure 1 est destiné à être monté à l'arrière d'un véhicule automobile de type break. Dans la suite de la description, les directions longitudinale, transversale, verticale, l'avant, l'arrière, la droite et la gauche seront définis en référence au sens de déplacement normal du véhicule automobile.

Le pare-chocs 1 représenté sur la figure 1 comprend :
- une peau de pare-chocs 2 s'étendant suivant une direction générale transversale, la peau de pare-chocs comprenant une aile supérieure 4 tournée vers le haut et un bouclier transversal 6 apte à recevoir les chocs, l'aile supérieure 4 et le bouclier 6 délimitant entre eux une cavité 8 ;
- une poutre transversale 10 apte à être fixée à la caisse du véhicule, disposée dans la cavité 8 de la peau de pare-chocs 2 ;
- un support transversal 12 de la peau de pare-chocs 2, disposé d'un côté de la poutre 10 opposé au bouclier 6.

La peau de pare-chocs 2 présente, dans un plan vertical longitudinal, une section sensiblement en C ouverte vers l'avant du véhicule. L'aile supérieure 4 s'étend dans un plan transversal horizontal. Le bouclier 6 est tourné vers l'arrière et vers le bas.

La poutre 10 est fixée sur la caisse du véhicule par l'intermédiaire d'absorbeurs de chocs non représentés. Elle présente un espace intérieur creux 14 et comporte, si nécessaire, des nervures de rigidification internes 16 disposées à l'intérieur de l'espace 14. La poutre 10 présente, par exemple, une section longitudinale verticale rectangulaire, et est pourvue de deux grandes faces 18 et 20 tournées respectivement vers le support central 12, d'un côté avant, et vers le bouclier 6, d'un côté arrière. Les grandes faces 18 et 20 sont verticales, transversales et parallèles l'une à l'autre. Les absorbeurs de chocs sont placés aux deux extrémités transversales opposées de la poutre 10. La grande face 20 est par exemple espacée longitudinalement du bouclier 6. En variante, la grande face 20 peut être proche, voire au contact du bouclier 6.

Le support 12 est une pièce en matière plastique venue de moulage. Il comporte un cadre 22, une patte transversale 24 de positionnement de la peau de pare-chocs 2, et un ensemble 26 de plaques de support de l'aile supérieure 4 de la peau de pare-chocs.

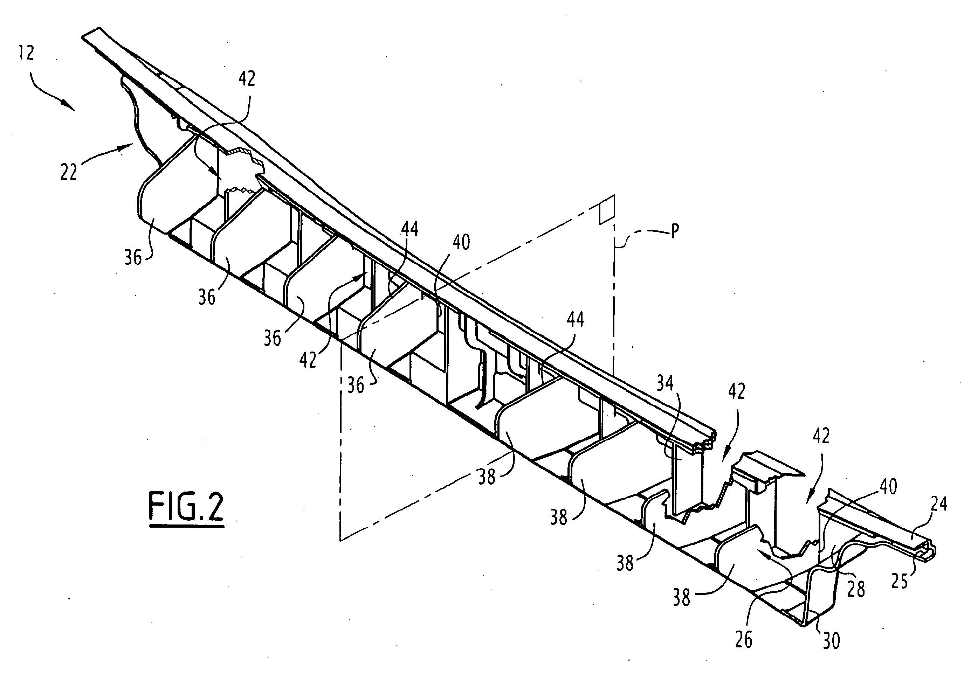

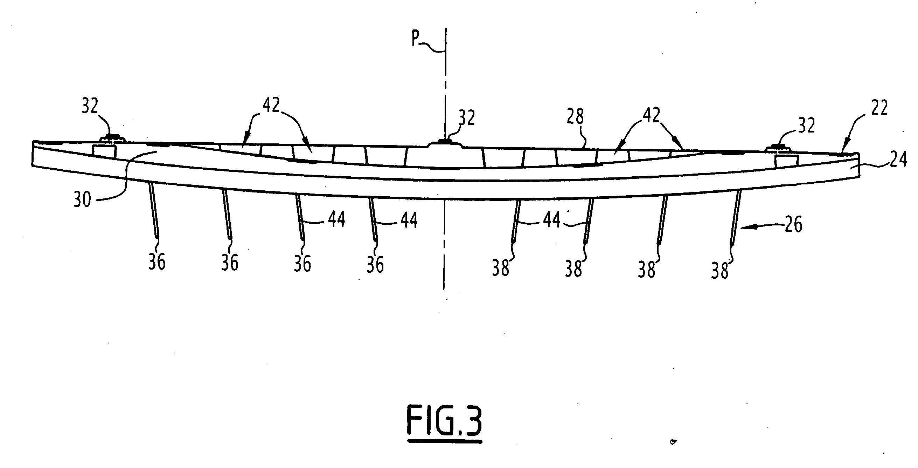

Comme le montrent les figures 2 et 3, le cadre 22 présente une forme allongée transversalement. Il comporte un fond 28 sensiblement plat et susceptible d'être rigidement fixé sur la caisse du véhicule. Il comporte également un bord 30 s'étendant sur toute la périphérie du fond 28 et dressé vers l'arrière, c'est-à-dire vers la poutre 10.

La patte 24 s'étend sur toute la largeur transversale du support 12 et est placée au-dessus du cadre 22. Elle est portée par le cadre 22 et définit une rainure transversale 25 ouverte vers l'arrière.

Le fond 28 est percé par exemple de trois trous 32 de fixation du support 12 sur la caisse (figure 3). Par ailleurs, le support 12 comporte des nervures 34 verticales et transversales de rigidification (figure 2). Ces nervures sont formées sur le fond 28 et font saillie vers l'arrière.

Le support 12 comprend un premier ensemble de plaques 36 parallèles les unes aux autres et liées à une moitié transversale gauche du cadre 22. Il comprend également un second ensemble de plaques 38 parallèles les unes aux autres et liées à une moitié transversale droite du cadre 22. Les plaques 36 et 38 font saillie à partir du fond 28 vers l'arrière. Les plaques 36 du premier ensemble et les plaques 38 du second ensemble sont disposées de manière symétrique les unes des autres par rapport au plan vertical longitudinal P médian du support 12, comme le montrent les figures 2 et 3.

Les plaques 36 sont espacées transversalement les unes des autres. De même, les plaques 38 sont espacées transversalement les unes des autres. Les plaques 36 s'étendent dans des plans verticaux inclinés par rapport aux directions longitudinales et transversales. Plus précisément, elles s'étendent, à partir du fond 28, vers l'arrière et vers le plan P médian du support. De même, les plaques 38 s'étendent dans des plans verticaux inclinés par rapport aux directions longitudinales et transversales. Elles s'étendent à partir du fond 28 vers l'arrière et vers le plan P médian du support.

Les plaques 36 et 38 sont liées au cadre le long de lignes verticales 40 (figures 1 et 2) espacées transversalement les unes des autres. Ces lignes 40 présentent une moindre épaisseur relativement aux plaques 36 et 38 et sont donc des lignes de moindre résistance mécanique. Par exemple, les plaques présentent une épaisseur de 3 mm, alors que les lignes 40 de jonction entre les plaques 36 et 38 et le fond 28 présentent une épaisseur de 2,5 mm seulement.

Par ailleurs, comme le montre les figures 2 et 3, le cadre 22 comporte des fenêtres 42 disposées entre les lignes 40. Le cadre 22 comporte ainsi une fenêtre 42 pour chacune des plaques 36 et 38. Les fenêtres 42 sont placées immédiatement à droite des plaques 36 et immédiatement à gauche des plaques 38. Chaque plaque 36 ou 38 se trouve donc longitudinalement dans le prolongement de la fenêtre 42 correspondante. Cette disposition, comme on l'expliquera plus loin, permet de faciliter le démoulage du support 12.

Les bords supérieurs 44 des plaques 36 et 38 sont sensiblement horizontaux et sont placés immédiatement en dessous de l'aile supérieure 4 de la peau de pare-chocs.

La poutre 10 est placée à distance du cadre 22 et est espacée longitudinalement du cadre 22. On ménage ainsi un espace de dégagement 46 entre la poutre 10 et le cadre 22 en vue de débattements de la poutre 10 longitudinalement en cas de choc sur le bouclier 6. Les plaques 36 et 38 s'étendent dans l'espace 46.

Enfin, comme le montre la figure 1, l'aile supérieure 4 porte le long de son bord transversal avant une patte 48 susceptible de s'engager dans la rainure 25 de la patte 24.

Le comportement du pare-chocs décrit ci-dessus, en situation normale et en cas de choc arrière, va maintenant être détaillé.

Comme le montre la figure 1, en situation normale, la patte 48 de la peau de pare-chocs est engagée dans la patte 24 du support 12. Ces deux pattes coopèrent pour assurer la mise en référence suivant les directions longitudinales et transversales de la peau de pare-chocs par rapport au support 12. Le support 12 est lui-même référencé par rapport à la caisse.

Par ailleurs, l'aile supérieure 4 de la peau de pare-chocs 2 est supportée par les plaques 36 et 38. Le pare-chocs est apte à supporter une charge élevée suivant une direction verticale, avec une faible déformation. Par exemple, quand un effort vertical de 100 dN est exercé sur le pare-chocs, la déformation de la peau de pare-chocs 2 est inférieure à 5 mm. En outre, les plaques 36 et 38 assurent un positionnement extrêmement précis en Z de la peau de pare-chocs 2.

En cas de choc longitudinal sur le bouclier 6, le bouclier 6 se déplace longitudinalement vers l'avant et sollicite la poutre 10. Celle-ci à son tour s'escamote vers l'avant du véhicule dans le volume 48, en écrasant les absorbeurs de chocs.

Les plaques 36 et 38 sont sollicitées vers l'avant par la poutre 10, et s'escamotent par pivotement autour des lignes de jonction 40. Sur la représentation de la figure 3, les plaques 36 pivotent vers la droite et les plaques 38 pivotent vers la gauche. Les plaques 36 et 38 se rabattent ainsi vers le centre du support 12. L'effacement des plaques 36 et 38 est facilité du fait que les lignes 40 sont des lignes de moindre épaisseur de matière. Les plaques 36 et 38, en s'effaçant, ne perturbent pas le débattement de la poutre 10 dans le volume 48.

Le pare-chocs décrit ci-dessus présente de multiples avantages.

Le fait que le support comporte des plaques disposées dans l'espace de dégagement sous l'aile supérieure de la poutre pare-chocs et apte à s'escamoter en cas de choc sur le bouclier permet de réaliser le supportage de la peau de pare-chocs suivant une direction verticale. Ceci permet de satisfaire au critère de déformation sous effort vertical et donc de rendre le pare-chocs utilisable à l'arrière d'un véhicule automobile de type Break.

En particulier, le fait que les plaques 36 et 38 s'escamotent sous l'effet du déplacement de la poutre 10 fait que l'amortissement du choc, résultant de l'écrasement des absorbeurs par la poutre, n'est pas perturbé.

L'escamotage des plaques 36 et 38 est rendu possible du fait de l'inclinaison des plaques par rapport à la direction longitudinale. Les zones de moindre résistance ménagées aux lignes 40 de jonction des plaques sur le cadre facilitent encore l'escamotage des plaques.

Le support 12 est particulièrement facile à produire par moulage d'une matière plastique. Un premier côté du moule définit la face avant du support 12. Il comporte des parties proéminentes destinées à s'engager dans les fenêtres 42 découpées dans le fond 28 du cadre. Ces parties proéminentes viennent définir les faces des plaques 36 et 38 tournées transversalement vers le centre du support. Le deuxième côté du moule défini la face arrière du support et en particulier les faces des plaques 36 et 38 tournées vers l'extérieur du support 12.

Le support 12 permet une mise en référence très précise de la peau de pare-chocs 2 suivant les directions longitudinale et transversale, par l'intermédiaire de la patte 24. Le support permet également une bonne mise en référence suivant la direction verticale de la peau de pare-chocs, par l'intermédiaire de l'aile supérieure 4 reposant sur le bord supérieur 44 des plaques 36 et 38.

Le pare-chocs peut présenter de multiples variantes.

Le nombre de plaques 36 et 38 du support peut être différent de 8.

Le pare-chocs peut être disposé à l'avant du véhicule ou à l'arrière. Il peut être utilisé pour un véhicule de type Break ou au contraire pour un véhicule de type Berline.

L'inclinaison des plaques 36 et 38 relativement aux directions longitudinale et transversale est déterminée par calcul, au cas par cas, en fonction des efforts exercés par la poutre 10 sur les plaques.

Par ailleurs, les lignes de jonction 40 peuvent ne pas être des lignes de moindre résistance mécanique. De même que précédemment, on détermine par calcul, en fonction des efforts exercés par la poutre 10 sur les plaques 36 et 38, s'il est nécessaire ou non de prévoir des lignes de jonction de moindre résistance mécanique entre les plaques et le fond du cadre.

## Revendications

1. Pare-chocs de véhicule automobile, comprenant :
- une peau de pare-chocs (2) s'étendant suivant une direction transversale, la peau de pare-chocs (2) comprenant une aile supérieure (4) tournée vers le haut et un bouclier (6) transversal apte à recevoir les chocs, l'aile supérieure (4) et le bouclier (6) délimitant entre eux une cavité (8),
- une poutre transversale (10) apte à être fixée à la caisse du véhicule, disposée dans la cavité (8) de la peau de pare-chocs (2),
- un support transversal (12) de la peau de pare-chocs (2) disposé d'un côté de la poutre (10) opposé au bouclier (6), un espace de dégagement (46) étant laissé entre la poutre (10) et le support (12) en vue du débattement de la poutre (10) en cas de choc sur le bouclier (6),
le support (12) comprenant au moins un organe (36, 38) de support de l'aile supérieure (4) de la peau de pare-chocs (2), disposé sous l'aile supérieure (4) dans l'espace de dégagement (46), apte à s'escamoter en cas de choc sur le bouclier (6), sous l'effet du déplacement de la poutre (10) qui vient solliciter l'organe de support (36, 38), **caractérisé en ce que** le support (12) comprend un cadre (22) transversal apte à être rigidement fixé sur la caisse du véhicule, et une pluralité de d'organes de support (36, 38) chacun formé d'une plaque verticale disposée dans un plan incliné par rapport à des directions longitudinale et transversale.

2. Pare-chocs selon la revendication 1, **caractérisé en ce que** le support (12) comprend un premier ensemble de plaques (36) mutuellement parallèles liées à une première moitié transversale du cadre (22), et un second ensemble de plaques (38) mutuellement parallèles liées à une seconde moitié transversale du cadre (22) opposé à la première. 2.

3. Pare-chocs selon la revendication 2, **caractérisé en ce que** les plaques (36, 38) des premier et second ensembles sont disposées de manière symétrique par rapport au plan (P) vertical longitudinal médian du support (12).

4. Pare-chocs selon l'une quelconque des revendications 1 à 3, **caractérisé en ce que** les plaques (36, 38) sont liées au cadre (22) le long de lignes (40) de moindre résistance mécanique.

5. Pare-chocs selon l'une quelconque des revendications 1 à 4, **caractérisé en ce que** les plaques (36, 38) sont liées au cadre (22) le long de lignes (40) espacées transversalement les unes des autres, le support (12) étant venu de moulage, et le cadre (22) comportant entre lesdites lignes (40) des fenêtres (42) en vue du démoulage des plaques (36, 38).

## Claims

1. Bumper for a motor vehicle, comprising:
- a bumper skin (2) extending in a transverse direction, the bumper skin (2) comprising an upper wing (4) facing upwards and a transverse skirt (6) arranged to receive impacts, the upper wing (4) and the skirt (6) delimiting between them a cavity (8),
- a transverse beam (10) arranged to be fixed to the body of the vehicle and disposed in the cavity (8) of the bumper skin (2),
- a transverse support (12) for the bumper skin (2), disposed on a side of the beam (10) that is opposite to the skirt (6), a clearance space (46) being left between the beam (10) and the support (12) for movement of the beam (10) in the event of impact to the skirt (6),
the support (12) comprising at least one member (36, 38) for supporting the upper wing (4) of the bumper skin (2), disposed underneath the upper wing (4) in the clearance space (46) and arranged to retract in the event of impact to the skirt (6) under the effect of the displacement of the beam (10) applying a force to the supporting member (36, 38),
**characterised in that** the support (12) comprises a transverse frame (22) arranged to be rigidly fixed to the body of the vehicle, and a plurality of supporting members (36, 38) each composed of a vertical plate disposed in an inclined plane relative to the longitudinal and transverse directions.

2. Bumper according to claim 1, **characterised in that** the support (12) comprises a first set of mutually parallel plates (36) connected to a first transverse half of the frame (22) and a second set of mutually parallel plates (38) connected to a second transverse half of the frame (22), opposite the first.

3. Bumper according to claim 2, **characterised in that** the plates (36, 38) of the first and second sets are symmetrically disposed relative to the central vertical longtudinal plane (P) of the support (12).

4. Bumper according to any one of claims 1 to 3, **characterised in that** the plates (36, 38) are connected to the frame (22) along lines (40) of lesser mechanical strength.

5. Bumper according to any one of claims 1 to 4, **characterised in that** the plates (36, 38) are connected to the frame (22) along lines (40) spaced apart from one another transversally, the support (12) having been integrally moulded and the frame (22) having, between said lines (40), windows (42) for releasing the plates (36, 38) from the mould.

## Patentansprüche

1. Kraftfahrzeugstoßstange, die folgendes umfasst:
- eine sich quer erstreckende Stoßstangen-Außenschale (2), wobei die Stoßstangen-Außenschale (2) einen oberen Flügel (4), der aufwärts gebogen ist, und ein Querschild (6), das dazu ausgelegt ist, Aufpralle aufzunehmen, wobei der obere Flügel (4) und das Schild (6) zwischen sich einen Hohlraum (8) eingrenzen, umfasst,
- einen in dem Hohlraum (8) der Außenschale der Stoßstange (2) angeordneten Querträger (10), der zur Befestigung an der Karosserie des Fahrzeugs ausgelegt ist,
- eine Querauflage (12) der Außenschale der Stoßstange (2), die auf einer Seite des Trägers (10) gegenüber von Schild (6) angeordnet ist, wobei ein Freiraum (46) zwischen dem Träger (10) und der Auflage (12) im Hinblick auf die Loslösung des Trägers (10) im Falle eines Aufpralls auf Schild (6) belassen ist,
- wobei der Träger (12) mindestens eine unter dem oberen Flügel (4) in dem Freiraum (46) angeordnete Auflageeinrichtung (36, 38) des oberen Flügels (4) der Außenschale der Stoßstange (2) umfasst, die dazu ausgelegt ist, sich im Falle eines Aufpralls auf Schild (6) unter der Wirkung der Verschiebung des Trägers (10), der dann die Auflageeinrichtung (36, 38) belastet, einzuziehen,
**dadurch gekennzeichnet, dass** die Auflage (12) einen Querrahmen (22), der dazu ausgelegt ist, starr an der Karosserie des Fahrzeugs befestigt zu werden, und eine Vielzahl von Auflageeinrichtungen (36, 38) umfasst, die jeweils aus einer vertikalen Platte geformt sind, die in einer Ebenen angeordnet ist, die bezüglich der Längs- und Querrichtung geneigt ist.

2. Kraftfahrzeugstoßstange nach Anspruch 1, **dadurch gekennzeichnet, dass** die Auflage (12) eine erste Gesamtheit von Platten (36), die parallel zueinander mit einer ersten Seitenhälfte des Rahmens (22) verbunden sind, und eine zweite Gesamtheit von Platten (38), die parallel zueinander mit einer zweiten Seitenhälfte des Rahmens (22) gegenüber der ersten Hälfte verbunden sind, umfasst.

3. Kraftfahrzeugstoßstange nach Anspruch 2, **dadurch gekennzeichnet, dass** die Platten (36, 38) der ersten und zweiten Gesamtheit bezüglich der senkrechten vertikalen Ebene (P) in der Mitte der Auflage (12) symmetrisch angeordnet sind.

4. Kraftfahrzeugstoßstange nach einem der Ansprüche 1 bis 3, **dadurch gekennzeichnet, dass** die Platten (36, 38) entlang von Linien (40) des geringsten Widerstands mit dem Rahmen (22) verbunden sind.

5. Kraftfahrzeugstoßstange nach einem der Ansprüche 1 bis 4, **dadurch gekennzeichnet, dass** die Platten (36, 38) entlang von gegenseitig beabstandeten Linien (40) mit dem Rahmen (22) verbunden sind, wobei die Auflage (12) preßgeformt ist und der Rahmen (22) zwischen den Linien (40) Sichtfenster (42) zwecks Entformung der Platten (36, 38) umfasst.
